# EUROPEAN PATENT SPECIFICATION

(11) **EP 4 463 311 B1**
(45) Date of publication and mention of the grant of the patent: **26.08.2026**
(21) Application number: 23705564.5
(22) Date of filing: 20.02.2023
(51) Int. Cl.: B29C 70/46, B29C 70/54, B29C 33/34, B29C 33/30, F03D 1/06, B29C 70/34, B29C 33/22, B29L 31/08

(54) **METHOD OF MANUFACTURING A WIND TURBINE ROTOR BLADE**
VERFAHREN ZUR HERSTELLUNG EINER WINDTURBINENROTORSCHAUFEL
PROCÉDÉS DE FABRICATION DE PALE DE ROTOR D'ÉOLIENNE

(30) Priority: 02.03.2022 EP 22159647
(43) Date of publication of application: 20.11.2024
(73) Proprietor: Siemens Gamesa Renewable Energy A/S, 7330 Brande (DK)
(72) Inventor: CAPPUGI, Lorenzo, 9000 Aalborg (DK); HENRICHSEN, Soeren Randrup Daugaard, 9310 Vodskov (DK); KRUSE, Patrick, 9220 Aalborg Øst (DK)
(74) Representative: SGRE-Association
(86) International application number: PCT/EP2023/054191
(87) International publication number: WO 2023/165835

(56) References cited:
- EP-A2- 2 305 998
- WO-A1-2018/024306
- DE-A1- 102018 009 331
- US-A1- 2012 251 654
- LM WIND POWER: "Building record-breaking blades to change the world through the power of wind", 11 November 2021 (2021-11-11), XP055949978, Retrieved from the Internet <URL:https://www.youtube.com/watch?v=smLk7Z4XxyI> [retrieved on 20220809]
- BROADCAST MEDIA SERVICES (BMS): "MHI Vestas - V164 Blade", 11 October 2016 (2016-10-11), XP055949988, Retrieved from the Internet <URL:https://www.youtube.com/watch?v=3Qm9qagk48E> [retrieved on 20220809]

## Description

### Background

A wind turbine rotor blade is generally manufactured by arranging layers of a composite material such as fibreglass in a mould, infusing the composite material with resin, and removing the cured rotor blade from the mould. The mould may have a lower half and an upper half, which are connected prior to the resin infusing step. To remove the cured rotor blade, the upper half must be removed. However, the size of present-day rotor blades complicates this step. The length of a rotor blade can be 100 m or more, and the diameter of the root end of such a long rotor blade can be 4 m or more, which means that the height of the upper mould (for that rotor blade) is more than 3 m at the root end. In order to lift the upper mould from the cured rotor blade, an overhead of more than 3 m is therefore required. The ceiling height of the manufacturing facility would need to be at least 10 m or even more. Sufficient overhead is required to provide handling room for a lifting means such as a crane so that the composite layup is not damaged while placing the upper mould prior to the resin infusion step, and the rotor blade is not damaged when removing the upper mould after the curing step. For this reason, if longer rotor blades with larger root ends are to be manufactured, a new facility may need to be built, which can incur costs in the order of 100 million Euros. WO 2018/024306 A1 discloses a method of manufacturing a wind turbine rotor blade and a wind turbine rotor blade mould for use in said method.

It is therefore an object of the invention to provide an improved way of manufacturing a wind turbine rotor blade.

This object is achieved by the claimed method of manufacturing a wind turbine rotor blade and by the claimed wind turbine rotor blade mould.

### Description

According to the invention, the method of manufacturing a wind turbine rotor blade comprises the steps of providing a rotor blade mould that consists of a lower mould and a segmented upper mould, the segmented upper mould comprising a root end mould section and a number of airfoil mould sections, and arranging a composite material layup in the lower mould to form the shape of the rotor blade. The inventive method comprises a subsequent step of arranging the upper mould over the composite layup by placing the root end mould section at the position of an airfoil mould section; moving the root end mould section in a longitudinal direction to its intended position at the root end of the composite layup; and placing the airfoil mould sections in their positions on the composite layup. These steps can be followed by appropriate stages in the manufacturing procedure, for example resin infusion and curing stages.

An advantage of the inventive method is that less overhead or clearance is required to carry out the method steps, compared to a prior art manufacturing approach, which generally require clearance of at least the root end radius. Instead of having to provide sufficient room to hoist a one-piece upper mould half into place over the composite layup before lowering it onto the lower mould half, the inventive method instead places the root end mould section initially above an airfoil region of the composite layup, and then moves it in the direction of the root end until it reaches its correct position relative to the lower mould half. With this novel approach, the upper mould half does not require clearance of more than the root end radius. Instead, the height of the closed mould can be close to the ceiling of the manufacturing facility. The inventive method can allow an existing rotor blade manufacturing facility to be used to manufacture rotor blades with larger root ends, i.e. the cost of constructing a new manufacturing facility can be avoided.

According to the invention, the wind turbine rotor blade mould comprises a lower mould shaped to mould one side of a rotor blade and a segmented upper mould shaped to mould the other side of the rotor blade. The segmented upper mould comprises a root end mould section and a number of airfoil mould sections. Each section of the upper mould is configured for handling by a handling means that is adapted to effect a sideways displacement of an upper mould section during a mould assembly stage and/or a mould disassembly stage.

Particularly advantageous embodiments and features of the invention are given by the dependent claims, as revealed in the following description. Features of different claim categories may be combined as appropriate to give further embodiments not described herein.

In the following, it may be assumed that the rotor blade is a "long" rotor blade as mentioned in the introduction, with a length in the order of 100 m or more, with a correspondingly large root end diameter, for example 4 m or more. As explained in the introduction, it is primarily the root end diameter that leads to the problems described above in the context of the prior art moulding procedures.

The outboard end of a long rotor blade may be shaped to curve in the upwind direction in its non-loaded state. When installed in a wind turbine, such a "pre-bent" rotor blade will straighten out during operation of the wind turbine, but the pre-bend curvature ensures that tip-tower collisions are avoided in high wind speed conditions. In the following, it may be assumed that the rotor blade mould is constructed for the manufacture of a pre-bent rotor blade, but the inventive method can equally well be applied to a straight rotor blade and/or a short rotor blade.

The mould halves can be constructed in any suitable manner. For example, each mould half may comprise an inner face that will shape the outer surface of one side of the rotor blade.

For example, the lower mould half may shape the suction side of the rotor blade, while the upper mould half may shape the pressure side of the rotor blade. Since the mould halves and the composite layup can have a very large combined weight, each mould half can be arranged in a supporting framework. In a preferred embodiment of the invention, the rotor blade mould comprises a support structure arranged to enclose the lower mould half, and to support the outer edges of the upper mould half when this is in place over the composite layup.

The upper mould half can comprise any number of sections. In a preferred embodiment of the invention, in addition to the root end section, the upper mould half comprises at least two airfoil mould sections. For example, the upper mould half can comprise the root end mould section, one or more inboard airfoil mould sections, and an outboard airfoil mould section. The number of airfoil mould sections can depend on various factors, for example a rotor blade airfoil thickness, space constraints between adjacent rotor blade moulds in a production hall, a ceiling height, a crane capacity, mould section storage constraints, etc.

The upper mould sections can be moved using any suitable handling means. In a particularly preferred embodiment of the invention, the mould section handling means comprises a suitable number of cranes, for example any suitable combination of a mobile bridge crane, a ceiling-mounted bridge crane, a gantry crane, a jib crane, etc. A set of cranes can be operated synchronously or independently of each other as appropriate.

For example, a jib crane may lift the root end mould section in a sideways motion onto the mould support structure, and a bridge crane can be deployed to move the root end mould section in a longitudinal direction towards the root end. The jib crane is then deployed again to lift the airfoil mould sections, one after another, into place onto the composite layup. These steps can be carried out in reverse order after the moulding procedure: the jib crane is deployed again to lift the airfoil mould from the moulded and cured rotor blade; the bridge crane is deployed to move the root end mould section in a longitudinal direction towards the space vacated by the airfoil mould section(s), and the jib crane is then used again to lift the root end mould section in a sideways motion from the mould support structure.

Any cranes used in the inventive method may be readily available to purchase or hire. Alternatively, a bridge crane can be constructed to suit the width of the rotor blade mould and/or the required length of travel; similarly a jib crane can be constructed to perform the sideways lifting manoeuvres of the inventive method, so that the wind turbine rotor blade moulding arrangement comprises an embodiment of the inventive rotor blade mould, as well as a mould section handling means configured to place the upper mould sections onto the composite layup during a mould assembly stage and to remove the upper mould sections from the lower mould during a mould disassembly stage.

A "sideways displacement" of a mould section is to be understood as a procedure in which the mould section is moved essentially laterally, i.e. in an essentially horizontal direction that is perpendicular to the longitudinal axis of the mould. In other words, an upper mould section is not lifted by any significant amount about the level of the lower mould. If necessary, an upper mould section may be raised to clear the surface of the airfoil, but this height is insignificant. Unlike the prior art approach, there is no need to lift any upper mould section to a height required to clear the root end of the moulded rotor blade.

There can be any suitable number of upper mould sections, and each section can have any suitable length. The number of mould sections and the section lengths can be chosen according to the various constraints mentioned above, or in order to minimize the duration of mould assembly and disassembly stages, for example. In a preferred embodiment of the invention, the length of the airfoil mould section adjacent the root end mould section is at least as great as the length of the root end mould section, so that the root end mould section can be removed after removing that airfoil mould section.

During the moulding procedure, it is important to achieve a hermetic seal between the mould parts. In a preferred embodiment of the invention, adjacent upper mould sections comprise connection interfaces adapted to be joined during the mould assembly step. These connection interfaces can be realised in any suitable manner to achieve the necessary air-tightness for a subsequent resin infusion step. The assembled upper mould and the lower mould preferably also comprise a connection interface adapted to be joined during the mould assembly step, so that the closed mould achieves the necessary air-tightness for the subsequent resin infusion step.

As indicated above, the root end mould portion is able to "slide" in a longitudinal direction relative to the lower mould half. To facilitate this, the root end mould portion does not comprise any vertical half-disc to cover the root end of the composite layup, in contrast to a prior art mould half. Therefore, in a preferred embodiment of the invention, the upper mould comprises a root end plate which can be connected to the root end mould section. After bringing the root end mould section into position, the method comprises a subsequent step of completing the upper mould by connecting the root end plate to the root end of the mould. The root end plate can be realised as a half-disc that can be connected to a similar half disc forming one end of the lower mould. Alternatively, the root end plate can be a disc, with its lower half formed as part of the lower mould. In a further possible embodiment, the root end plate is a separate disc-shaped part that can be connected to the upper and lower moulds to complete the rotor blade mould.

In a particularly preferred embodiment of the invention, the root end plate comprises a flange extending perpendicularly outward, so that the root end plate can be connected in an air-tight manner to other parts of the mould. For example, a half-disc root end plate can have a semi-circular flange for connection to the root end mould section of the upper mould. The root end mould section can be formed so that the semi-circular flange of the root end plate fits inside the root end mould section. Such a half-disc root end plate can also have a straight flange extending along its straight bottom edge for connection to the lower mould.

Alternatively, the upper half of a disc-shaped root end plate can have a semi-circular flange for connection to the root end mould section of the upper mould, and the lower half of such a disc-shaped root end plate can be realised as part of the lower mould, or can be realised for connection, in some suitable manner, to the lower mould.

After completing the mould assembly stage, the rotor blade mould is effectively sealed and the next stage of manufacturing the rotor blade can commence. For example, resin may be infused into the mould through various ports provided in the mould, and a vacuum pump can be activated to generate an under-pressure, distributing the resin through the composite layup.

After a curing step, the inventive method proceeds with a subsequent step of removing the upper mould by removing at least the airfoil mould section adjacent the root end mould section; moving the root end mould section in a longitudinal direction to the position vacated by the removed airfoil mould section; and removing the root end mould section. As explained above, one or more suitable cranes are used to remove the upper mould sections, and each upper mould section is removed from the lower mould by an outward sideways displacement. In other words, it is not necessary to raise any upper mould segment above the level of the rotor blade root end, i.e. the lowest edge of a mould section remains below the height of the rotor blade root end during a sideways displacement step.

The inventive method reduces the amount of space required to assemble and disassemble a rotor blade mould. Instead of requiring at least 1.5 times the root end diameter in addition to crane handling overhead, the ceiling height in a manufacturing facility need only be a little more than the root end diameter in addition to crane handling overhead. The additional space is determined only by the thickness of the upper mould beyond the root end. In the case of large root end diameters as mentioned above, the inventive rotor blade mould can mean several meters less in ceiling height requirement, so that an already existing manufacturing facility (for rotor blades with smaller diameters) can be used to manufacture rotor blades with large diameters.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 7 show various stages in an exemplar embodiment of the inventive method;
Figure 8 is a flowchart of method steps;
Figure 9 shows a mould removal stage of the inventive method;
Figure 10 shows a mould removal stage in a prior art approach.

In the diagrams, like numbers refer to like objects throughout. Objects in the diagrams are not necessarily drawn to scale.

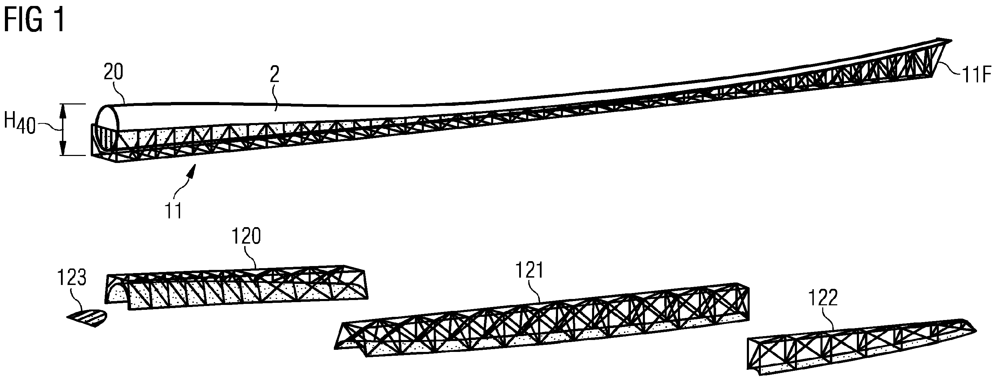

Figure 1 shows an embodiment of the inventive wind turbine rotor blade mould 1 in a partially assembled state. The diagram shows a lower mould 11 shaped to mould one side of a rotor blade, in this case the suction side. The lower mould is supported by a framework 11F which rests on the floor of a manufacturing facility. A composite layup 2 has been completed, and the next stage is to complete the mould and then perform a resin infusion process. The diameter H40 of the planned rotor blade is indicated at the root end of the composite layup 2. Sections 120, 121, 122 of an upper mould are shown in the diagram, along with a root end plate 123, ready for lifting into place.

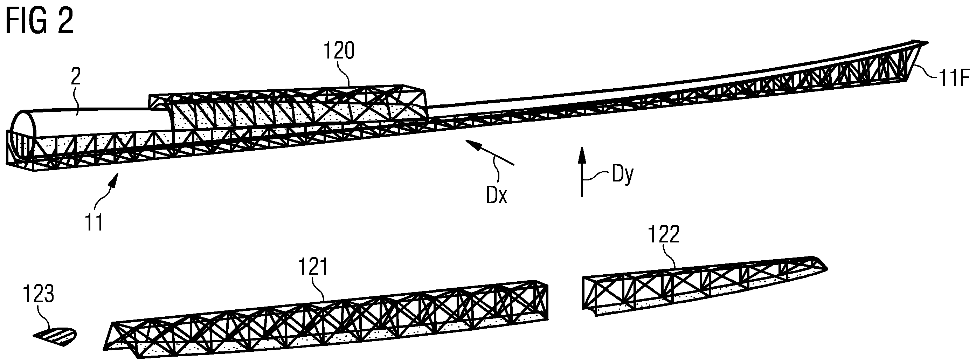

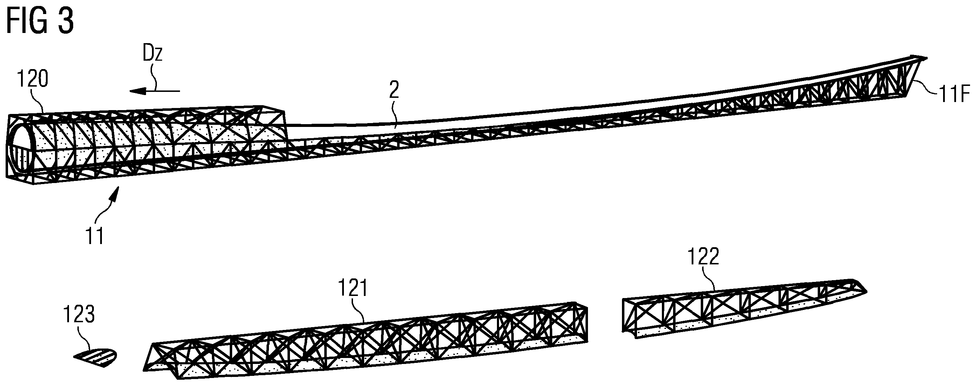

Figure 2 shows a subsequent stage in the inventive method. Here, a root end mould section 120 is lifted in a sideways direction Dx by a bridge crane (not shown) onto the supporting framework 11F. The root end mould section 120 may need to be raised by a relatively small amount Dy if the airfoil portion of the composite layup is higher than the upper edge of the lower mould 11. Then, as shown in Figure 3, the bridge crane is operated to move the root end mould section 120 in a longitudinal direction Dz towards the root end of the composite layup 2.

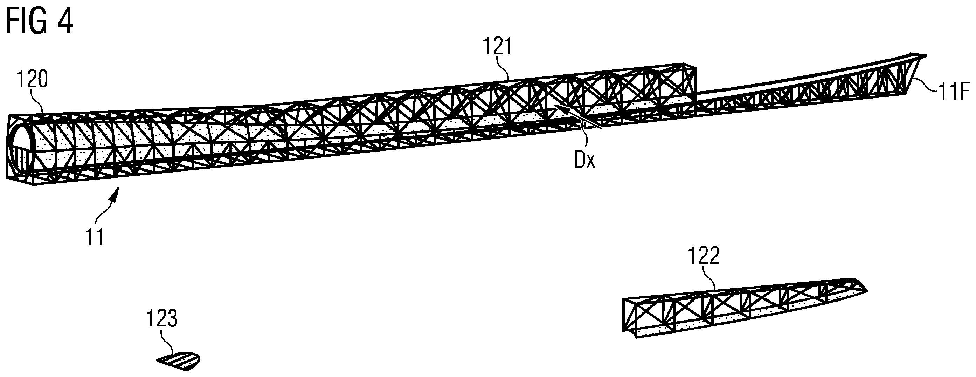

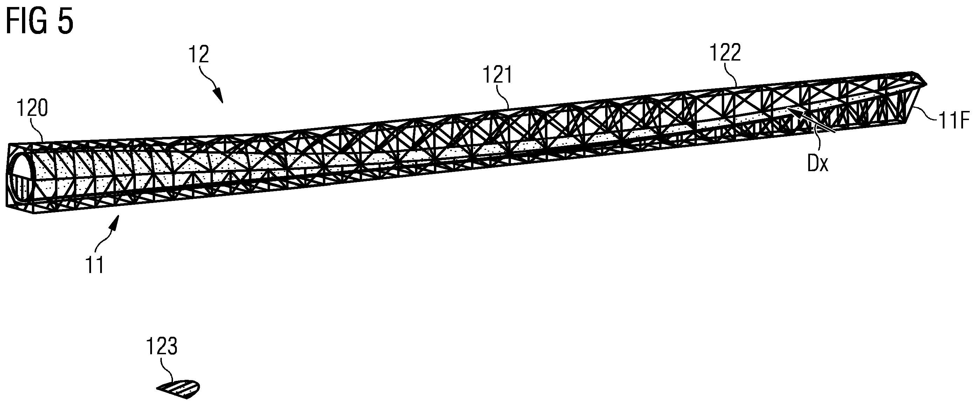

In Figure 4, an inboard airfoil mould section 121 is lifted in a sideways direction Dx by the bridge crane onto the supporting framework 11F, and in Figure 5, an outboard airfoil mould section 122 is lifted in a sideways direction Dx by the bridge crane onto the supporting framework 11F. Of course, these steps can be carried out in the reverse order so that the outboard airfoil mould section 122 is lifted into place, and the final inboard airfoil mould section 121 is then lifted into place space between the root end mould section 120 and the outboard airfoil mould section 122. These diagrams simply illustrate the concept, and it shall be understood that the upper mould sections can be placed in any suitable sequence.

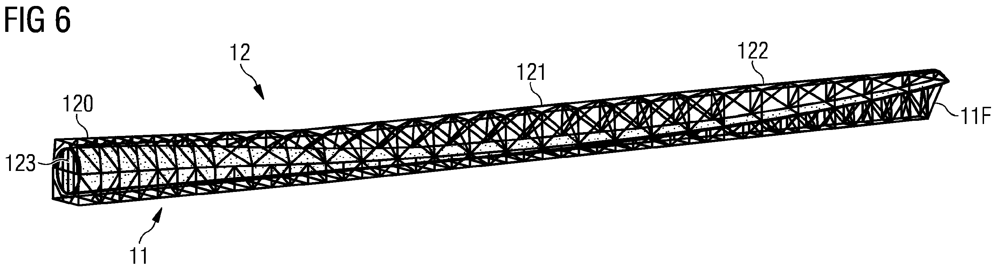

In Figure 6, a root end plate 123 is secured to the root end mould section 120. All upper mould sections 120, 121, 122 are connected to form an air-tight seal to complete the upper mould 12, and the upper mould 12 is then connected to the lower mould 11 to form an air-tight seal. As shown in the diagram, the upper mould 12 forms the pressure side of the rotor blade.

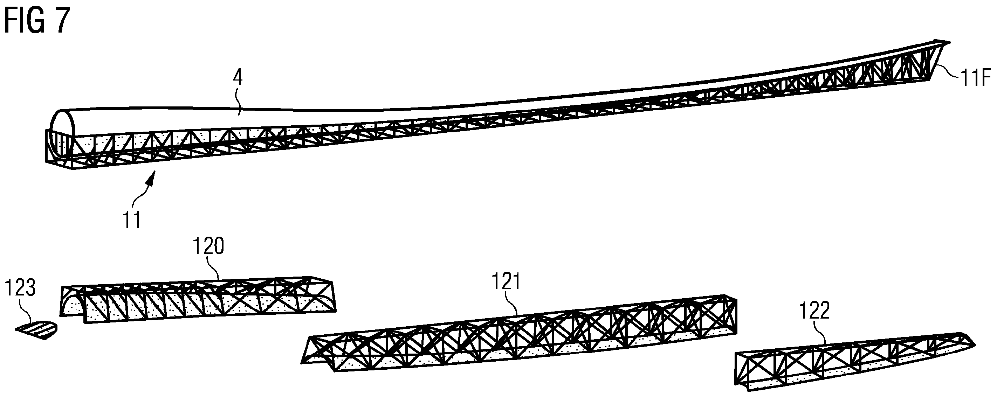

Resin infusion and curing stages can now be performed. After curing, the upper mould 12 is released from the lower mould 11, the root end plate 123 is removed, and the upper mould sections 120, 121, 122 are disconnected. As shown in Figure 7, the outboard and inboard mould sections 121, 122 are then removed by the bridge crane and put to one side (in any suitable sequence), and the bridge crane is then operated to move the root end mould section 120 in a longitudinal direction Dz towards the space vacated by the inboard airfoil mould section 121. The bridge crane is then operated to lift the root end mould section 120 in a sideways direction Dx to remove it from the supporting framework 11F, and to place it to one side. The cured rotor blade 4 can then be removed from the lower mould 11.

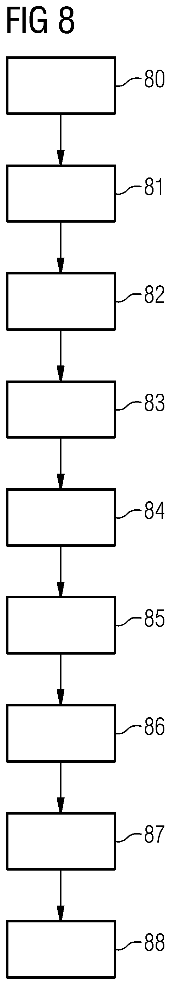

Figure 8 is a flowchart to illustrate steps of the inventive method. The method commences at step 80, with a completed composite layup in a lower mould 11. In step 81, a root end mould section is lifted sideways into place over the lower mould, and moved longitudinally into position over the root end of the composite layup. In step 82, the airfoil mould sections are lifted sideways into position over the composite layup. A root end plate is attached at the root end, the upper mould sections are joined, and the upper mould and lower mould are connected in step 83 to form an air-tight seal. Resin infusion and curing are performed in step 84. After curing, the mould sections are disconnected and the root end plate is detached in step 85. The airfoil mould sections are then lifted in a sideways direction from the lower mould in step 86. Subsequently, the root end mould section is moved longitudinally to the space vacated by the airfoil mould sections, and lifted sideways off the lower mould in step 87. The cured rotor blade can then be lifted out of the lower mould in step 88.

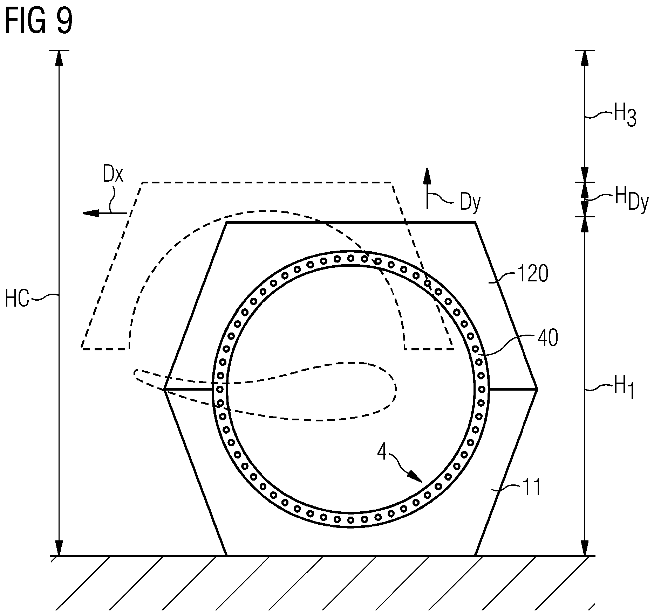

Figure 9 is a schematic diagram to illustrate an advantage of the invention. The circular root end 40 of a cured rotor blade 4 is indicated, in place in the lower mould 11 as described above. The root end 40 has a diameter H40 which can be very large in the case of a long rotor blade as explained in the introduction. The correspondingly large root end mould section 120 is indicated also.

The minimum ceiling height HC for the inventive method is the sum of the total mould height H1 plus a clearance HDy for any vertical lifting procedure, plus headroom H3 for a crane, for example a bridge crane. In an exemplary realisation for a rotor blade with a diameter of 4 m, the minimum ceiling height HC may be as low as 5 m. In an exemplary realisation for a rotor blade with a diameter of 6 m, the minimum ceiling height HC may be as low as 7 m.

As indicated in Figure 1, the height of the lower mould in an inboard region may be quite low, depending on the rotor blade geometry. For a rotor blade with significant curvature, the highest extent of the inboard airfoil may be even less than the height of the root end part of the lower mould. Therefore, the highest level that needs to be cleared by the underside of the root end mould section 120 during the sideways movement may in fact be no higher than the height of the lower mould at the root end, i.e. there is no need for any vertical lifting clearance (HDy = 0), and the minimum ceiling height is then determined only by the total mould height H1 plus crane headroom H3.

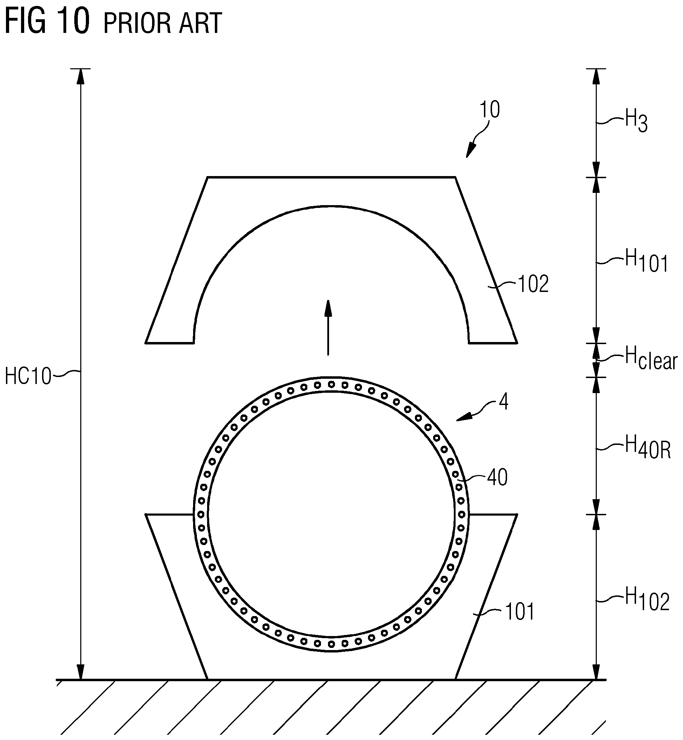

Figure 10 is a schematic diagram to illustrate the ceiling requirements as calculated for a prior art wind turbine rotor blade mould 10. Here also, the circular root end 40 of a cured rotor blade 4 is indicated, in place between a lower mould half 101 and an upper mould half 102. The upper mould 102 must be raised to clear the root end in order to place the upper mould 102 onto the lower mould 101 prior to resin infusion steps, and to remove the upper mould 102 from the lower mould 101 after curing the rotor blade 4. Here, the minimum ceiling height HC10 for the prior art mould and handling method includes the mould heights H101, H102, plus the root end radius H40R, plus safety clearance Hclear, plus headroom H3 for the handling procedure. With the same rotor blade diameter as described in Figure 9 above, the minimum ceiling height HC10 for the prior art procedure might be 8 m or more.

Although the present invention has been disclosed in the form of preferred embodiments and variations thereon, it will be understood that numerous additional modifications and variations could be made thereto without departing from the scope of the invention that is defined by the claims. For example, while the assembly and disassembly of the upper mould has been described in terms of movements along any of three orthogonal axes, an upper mould section can be moved in any direction, i.e. along a vector comprising any combination of X, Y, and Z components. Furthermore, an upper mould section need not be held horizontal while being lifted into place or while being lifted from the cured rotor blade, but can be held at an angle if appropriate.

For the sake of clarity, it is to be understood that the use of "a" or "an" throughout this application does not exclude a plurality, and "comprising" does not exclude other steps or elements.

## Claims

1. A method of manufacturing a wind turbine rotor blade (4), which method comprises at least the steps of
- providing a rotor blade mould (1) comprising a lower mould (11) and a segmented upper mould (12), the segmented upper mould (12) comprising a root end mould section (120) and a number of airfoil mould sections (121, 122);
- arranging a composite material layup (2) in the lower mould (11);
- arranging the upper mould (12) over the composite layup (2) **characterised by**:
- placing the root end mould section (120) at the position of an airfoil mould section (121);
- moving the root end mould section (120) in a longitudinal direction (Dz) to its intended position at the root end (20) of the composite layup (2); and
- placing the airfoil mould sections (121, 122) in their positions on the composite layup (2).

2. A method according to the preceding claim, wherein each upper mould section (120, 121, 122) is lifted onto the lower mould (11) by an inward sideways displacement (Dx).

3. A method according to any of the preceding claims, comprising a step of connecting a root end plate (123) to the root end mould section (120).

4. A method according to any of the preceding claims, comprising a step of performing a moulding procedure after closing the mould (1).

5. A method according to the preceding claim, comprising a subsequent step of removing the upper mould (12) by
- removing at least the airfoil mould section (121) adjacent the root end mould section (120);
- moving the root end mould section (120) in a longitudinal direction (Dz) to the position vacated by the removed airfoil mould section (121); and
- removing the root end mould section (120).

6. A method according to the preceding claim, wherein the step of moving the root end mould section (120) is preceded by a step of removing a root end plate (123).

7. A method according to any of the preceding claims, wherein each upper mould section (120, 121, 122) is removed by an outward sideways displacement (Dx).

8. A method according to any of the preceding claims, wherein the lowest edge of a mould section (120, 121, 122) remains below the height of the rotor blade root end (20, 40) during sideways displacement in a mould assembly stage and/or a mould disassembly stage.

9. A method according to any of the preceding claims, wherein the step of performing the moulding procedure is preceded by a step of connecting adjacent mould sections (120, 121, 122), and the step of removing the upper mould (12) is preceded by a step of disconnecting adjacent mould sections (120, 121, 122).

10. A wind turbine rotor blade mould (1) for use in the method according to any of claims 1 to 9, comprising
- a lower mould (11) shaped to mould one side of a rotor blade (4); and
- a segmented upper mould (12) shaped to mould the other side of the rotor blade (4), the segmented upper mould (12) comprising a root end mould section (120) and a number of airfoil mould sections (121, 122); and wherein
- each section (120, 121, 122) of the upper mould (12) is configured for handling by a handling means adapted to effect a sideways displacement (Dx) of an upper mould section (120, 121, 122) during a mould assembly stage and/or a mould disassembly stage.

11. A wind turbine rotor blade mould according to the preceding claim, wherein the rotor blade mould (1) comprises a support structure (1F) adapted to receive the upper mould (12).

12. A wind turbine rotor blade mould according to claim 10 or claim 11, comprising two or more airfoil mould sections (121, 122).

13. A wind turbine rotor blade mould according to any of claims 10 to 12, comprising a root end plate (123) for connection to the root end mould section (120) of the upper mould (12).

14. A wind turbine rotor blade mould according to any of claims 10 to 13, wherein adjacent upper mould sections (120, 121, 122) comprise connection interfaces adapted to be joined during the mould assembly step and released during the mould disassembly step.

15. A wind turbine rotor blade mould according to any of claims 10 to 14, wherein the handling means comprises a bridge crane and/or a jib crane.

## Patentansprüche

1. Verfahren zum Herstellen eines Windturbinenrotorblatts (4), wobei das Verfahren mindestens die folgenden Schritte umfasst
- Bereitstellen einer Rotorblattform (1), umfassend eine untere Form (11) und eine segmentierte obere Form (12), wobei die segmentierte obere Form (12) einen Fußendformabschnitt (120) und eine Anzahl von Profilformabschnitten (121, 122) umfasst;
- Anordnen eines Verbundmaterialauflegers (2) in der unteren Form (11);
- Anordnen der oberen Form (12) über dem Verbundaufleger (2), **gekennzeichnet durch**:
- Platzieren des Fußendformabschnitts (120) an der Position eines Profilformabschnitts (121);
- Bewegen des Fußendformabschnitts (120) in einer Längsrichtung (Dz) in dessen beabsichtigte Position an dem Fußende (20) des Verbundauflegers (2); und
- Platzieren der Profilformabschnitte (121, 122) in ihren Positionen auf dem Verbundaufleger (2).

2. Verfahren nach dem vorhergehenden Anspruch, wobei jeder obere Formabschnitt (120, 121, 122) durch eine nach innen gerichtete Seitwärtsverschiebung (Dx) auf die untere Form (11) gehoben wird.

3. Verfahren nach einem der vorhergehenden Ansprüche, umfassend einen Schritt des Verbindens einer Fußendplatte (123) mit dem Fußendformabschnitt (120).

4. Verfahren nach einem der vorhergehenden Ansprüche, umfassend einen Schritt des Durchführens einer Formprozedur nach dem Schließen der Form (1).

5. Verfahren nach dem vorhergehenden Anspruch, umfassend einen nachfolgenden Schritt des Entfernens der oberen Form (12) durch
- Entfernen mindestens des Profilformabschnitts (121), der an den Fußendformabschnitt (120) angrenzt;
- Bewegen des Fußendformabschnitts (120) in einer Längsrichtung (Dz) in die Position, die durch den entfernten Profilformabschnitt (121) freigegeben wird; und
- Entfernen des Fußendformabschnitts (120).

6. Verfahren nach dem vorhergehenden Anspruch, wobei dem Schritt des Bewegens des Fußendformabschnitts (120) ein Schritt des Entfernens einer Fußendplatte (123) vorausgeht.

7. Verfahren nach einem der vorhergehenden Ansprüche, wobei jeder obere Formabschnitt (120, 121, 122) durch eine nach außen gerichtete Seitwärtsverschiebung (Dx) entfernt wird.

8. Verfahren nach einem der vorhergehenden Ansprüche, wobei die unterste Kante eines Formabschnitts (120, 121, 122) während der Seitwärtsverschiebung in einer Formmontagephase und/oder einer Formzerlegungsphase unter der Höhe des Rotorblattfußendes (20, 40) bleibt.

9. Verfahren nach einem der vorhergehenden Ansprüche, wobei dem Schritt des Durchführens der Formprozedur ein Schritt des Verbindens angrenzender Formabschnitte (120, 121, 122) vorausgeht und dem Schritt des Entfernens der oberen Form (12) ein Schritt des Trennens angrenzender Formabschnitte (120, 121, 122) vorausgeht.

10. Windturbinenrotorblattform (1) zur Verwendung in dem Verfahren nach einem der Ansprüche 1 bis 9, umfassend
- eine untere Form (11), die dazu gestaltet ist, eine Seite eines Rotorblatts (4) zu formen; und
- eine segmentierte obere Form (12), die dazu gestaltet ist, die andere Seite des Rotorblatts (4) zu formen, wobei die segmentierte obere Form (12) einen Fußendformabschnitt (120) und eine Anzahl von Profilformabschnitten (121, 122) umfasst; und wobei
- jeder Abschnitt (120, 121, 122) der oberen Form (12) zum Handhaben durch ein Handhabungsmittel konfiguriert ist, das dazu ausgelegt ist, eine Seitwärtsverschiebung (Dx) eines oberen Formabschnitts (120, 121, 122) während einer Formmontagephase und/oder einer Formzerlegungsphase zu bewirken.

11. Windturbinenrotorblattform nach dem vorhergehenden Anspruch, wobei die Rotorblattform (1) eine Trägerstruktur (1F) umfasst, die dazu ausgelegt ist, die obere Form (12) aufzunehmen.

12. Windturbinenrotorblattform nach Anspruch 10 oder Anspruch 11, umfassend zwei oder mehr Profilformabschnitte (121, 122).

13. Windturbinenrotorblattform nach einem der Ansprüche 10 bis 12, umfassend eine Fußendplatte (123) zur Verbindung mit dem Fußendformabschnitt (120) der oberen Form (12).

14. Windturbinenrotorblattform nach einem der Ansprüche 10 bis 13, wobei angrenzende obere Formabschnitte (120, 121, 122) Verbindungsschnittstellen umfassen, die dazu ausgelegt sind, während des Formmontageschritts zusammengefügt und während des Formzerlegungsschritts auseinandergebaut zu werden.

15. Windturbinenrotorblattform nach einem der Ansprüche 10 bis 14, wobei die Handhabungsmittel einen Brückenkran und/oder einen Auslegerkran umfassen.

## Revendications

1. Procédé de fabrication d'une pale de rotor d'éolienne (4), lequel procédé comprend au moins les étapes consistant à
- fournir un moule de pale de rotor (1) comprenant un moule inférieur (11) et un moule supérieur segmenté (12), le moule supérieur segmenté (12) comprenant une section de moule d'extrémité de pied (120) et un certain nombre de sections de moule de profil aérodynamique (121, 122) ;
- agencer une superposition de matériau composite (2) dans le moule inférieur (11) ;
- agencer le moule supérieur (12) au-dessus de la superposition de composite (2) **caractérisé par** :
- le placement de la section de moule d'extrémité de pied (120) au niveau de la position d'une section de moule de profil aérodynamique (121) ;
- le déplacement de la section de moule d'extrémité de pied (120) dans une direction longitudinale (Dz) vers sa position prévue au niveau de l'extrémité de pied (20) de la superposition de composite (2) ; et
- le placement des sections de moule de profil aérodynamique (121, 122) dans leurs positions sur la superposition de composite (2).

2. Procédé selon la revendication précédente, dans lequel chaque section de moule supérieur (120, 121, 122) est levée sur le moule inférieur (11) par un déplacement latéral vers l'intérieur (Dx).

3. Procédé selon l'une quelconque des revendications précédentes, comprenant une étape consistant à raccorder une plaque d'extrémité de pied (123) à la section de moule d'extrémité de pied (120).

4. Procédé selon l'une quelconque des revendications précédentes, comprenant une étape consistant à réaliser une procédure de moulage après la fermeture du moule (1).

5. Procédé selon la revendication précédente, comprenant une étape ultérieure consistant à retirer le moule supérieur (12) par
- le retrait d'au moins la section de moule de profil aérodynamique (121) adjacente à la section de moule d'extrémité de pied (120) ;
- le déplacement de la section de moule d'extrémité de pied (120) dans une direction longitudinale (Dz) vers la position libérée par la section de moule de profil aérodynamique (121) retirée ; et
- le retrait de la section de moule d'extrémité de pied (120).

6. Procédé selon la revendication précédente, dans lequel l'étape consistant à déplacer la section de moule d'extrémité de pied (120) est précédée par une étape consistant à retirer une plaque d'extrémité de pied (123).

7. Procédé selon l'une quelconque des revendications précédentes, dans lequel chaque section de moule supérieur (120, 121, 122) est retirée par un déplacement latéral vers l'extérieur (Dx).

8. Procédé selon l'une quelconque des revendications précédentes, dans lequel le bord le plus bas d'une section de moule (120, 121, 122) reste en dessous de la hauteur de l'extrémité de pied de pale de rotor (20, 40) pendant un déplacement latéral dans un stade d'assemblage de moule et/ou un stade de désassemblage de moule.

9. Procédé selon l'une quelconque des revendications précédentes, dans lequel l'étape consistant à réaliser la procédure de moulage est précédée par une étape consistant à raccorder des sections de moule (120, 121, 122) adjacentes, et l'étape consistant à retirer le moule supérieur (12) est précédée par une étape consistant à séparer des sections de moule (120, 121, 122) adjacentes.

10. Moule de pale de rotor d'éolienne (1) pour une utilisation dans le procédé selon l'une quelconque des revendications 1 à 9, comprenant
- un moule inférieur (11) profilé pour mouler un côté d'une pale de rotor (4) ; et
- un moule supérieur segmenté (12) profilé pour mouler l'autre côté de la pale de rotor (4), le moule supérieur segmenté (12) comprenant une section de moule d'extrémité de pied (120) et un certain nombre de sections de moule de profil aérodynamique (121, 122) ; et dans lequel
- chaque section (120, 121, 122) du moule supérieur (12) est configurée pour une manipulation par un moyen de manipulation adapté pour effectuer un déplacement latéral (Dx) d'une section de moule supérieur (120, 121, 122) pendant un stade d'assemblage de moule et/ou un stade de désassemblage de moule.

11. Moule de pale de rotor d'éolienne selon la revendication précédente, dans lequel le moule de pale de rotor (1) comprend une structure de support (1F) adaptée pour recevoir le moule supérieur (12).

12. Moule de pale de rotor d'éolienne selon la revendication 10 ou la revendication 11, comprenant deux sections de moule de profil aérodynamique (121, 122) ou plus.

13. Moule de pale de rotor d'éolienne selon l'une quelconque des revendications 10 à 12, comprenant une plaque d'extrémité de pied (123) pour un raccordement à la section de moule d'extrémité de pied (120) du moule supérieur (12).

14. Moule de pale de rotor d'éolienne selon l'une quelconque des revendications 10 à 13, dans lequel des sections de moule supérieur (120, 121, 122) adjacentes comprennent des interfaces de raccordement adaptées pour être jointes pendant le stade d'assemblage de moule et libérées pendant le stade de désassemblage de moule.

15. Moule de pale de rotor d'éolienne selon l'une quelconque des revendications 10 à 14, dans lequel le moyen de manipulation comprend un pont roulant et/ou une grue à flèche.
